(19) Europäisches Patentamt
European Patent Office
Office européen des brevets

(11) **EP 1 627 203 B1**

(12) **EUROPÄISCHE PATENTSCHRIFT**

(45) Veröffentlichungstag und Bekanntmachung des Hinweises auf die Patenterteilung:
**26.11.2014  Patentblatt 2014/48**

(21) Anmeldenummer: **04731355.6**

(22) Anmeldetag: **06.05.2004**

(51) Int Cl.:
***G01B 21/04*** *(2006.01)*

(86) Internationale Anmeldenummer:
**PCT/EP2004/004805**

(87) Internationale Veröffentlichungsnummer:
**WO 2004/106854 (09.12.2004 Gazette 2004/50)**

(54) **VERFAHREN ZUR KALIBRIERUNG EINES TASTERS**

METHOD FOR CALIBRATING A PROBE

PROCEDE D'ETALONNAGE D'UN PALPEUR

(84) Benannte Vertragsstaaten:
**DE FR GB IT**

(30) Priorität: **28.05.2003  DE 10324695**
**18.06.2003  DE 10327867**

(43) Veröffentlichungstag der Anmeldung:
**22.02.2006  Patentblatt 2006/08**

(73) Patentinhaber: **Carl Zeiss Industrielle Messtechnik GmbH**
**73447 Oberkochen (DE)**

(72) Erfinder: **LOTZE, Werner**
**01309 Dresden (DE)**

(74) Vertreter: **Henckell, Carsten et al**
**Carl Zeiss**
**Patentabteilung**
**73446 Oberkochen (DE)**

(56) Entgegenhaltungen:
**WO-A-00/25087     US-B1- 6 434 846**

• **PATENT ABSTRACTS OF JAPAN vol. 006, no. 225 (P-154), 10. November 1982 (1982-11-10) & JP 57 127805 A (OOSAKA KIKOU KK), 9. August 1982 (1982-08-09)**

**Beschreibung**

Die Erfindung betrifft ein Verfahren zur Messung von Messwerten auf einem Werkstück mit einem Koordinatenmessgerät, das einen messenden Tastkopf mit einem auslenkbaren Taststift aufweist, sowie ein Koordinatenmessgerät, mit dem dieses Verfahren ausgeführt werden kann und ein zugeordnetes Computerprogrammprodukt.

Derartige Verfahren sind aus dem Stand der Technik bereits bekannt. Bei derartigen Verfahren werden üblicherweise Tastköpfe verwendet, bei denen der Taststift in den drei Koordinatenrichtungen beweglich am Tastkopf befestigt ist. Dazu weisen bekannte Tastköpfe in ihrem inneren eine Tastkopfmechanik auf, über die der Taststift in den drei Koordinatenrichtungen ausgelenkt werden kann. Die Tastkopfmechanik weist dazu üblicherweise drei Führungen auf, wobei jede der Führungen die Bewegung in einer der drei Koordinatenrichtungen des Koordinatenmessgerätes zulässt. Dazu ist jede der drei Führungen parallel zu einer der Bewegungsrichtungen des Koordinatenmessgerätes ausgerichtet.

Um die durch die Messsysteme des Tastkopfes gemessenen Auslenkungen des Taststiftes in das Koordinatensystem des Koordinatenmessgerätes einzubinden, wurde in der Vergangenheit eine Transformationsmatrix verwendet, über die die gemessenen Messwerte der Tastiftauslenkung (Auslenkungssignale bzw. Tastkopfsignale) in ein Koordinatensystem des Koordinatenmessgerätes transformiert wurden. Die einzelnen Parameter dieser Matrix wurden in vorgeschalteten Kalibriervorgängen ermittelt.

Ein entsprechender Tastkopf, für den ein solcher Kalibriervorgang erläutert wurde ist in dem Artikel "Multidimensional measuring probe head improves accuracy and functionality of coordinate measuring machines" von "W. Lotze", erschienen im Jahre 1994 in der Zeitschrift Measurement 13 auf den Seiten 91 bis 97, Elsevier beschrieben. Hierin ist auf Seite 95 bis Seite 96 die Bestimmung der Parameter einer entsprechenden Matrix H für den zweidimensionalen Fall-der Taster kann nur in der x-y-Ebene bewegt werden- beschrieben.

In der WO 00/25087 A1 ist ein-Verfahren zum kalibrieren eines messenden Tastkopfes eines Koordinatenmessgerätes gezeigt. Im Laufe des Verfahrens werden auch hier die Parameter einer herkömmlichen Transformationsmatrix zur Transformation der Taststiftauslenkung in das Maschinenkoordinatensystem bestimmt.

In jüngerer Zeit werden aus unterschiedlichen Gründen Tastköpfe eingesetzt, deren Führungen keine Bewegung mehr parallel zu den Koordinatenrichtungen der Koordinatenachsen des Koordinatenmessgerätes zulassen. Beispielsweise werden Taster verwendet, deren Taststift in Richtung seiner Längsachse linear geführt ist, während der Taststift zur Bewegung in den beiden anderen Koordinatenrichtungen über ein Kardangelenk drehbeweglich gelagert ist.

Bei dem Versuch, einen derartigen Tastkopf unter Verwendung von herkömmlichen Transformationsmatrizen an ein Koordinatenmessgerät anzukoppeln, haben sich insoweit Probleme ergeben, als die bekannten Verfahren zur Kalibrierung entsprechender Tastköpfe nicht mehr konvergieren.

Unserer Erfindung liegt deshalb hiervon ausgehend die Aufgabe zugrunde das oben angegebene Messverfahren, sowie ein Koordinatenmessgerät, mit dem ein solches Messverfahren durchgeführt werden kann und ein entsprechendes Computerprogrammprodukt anzugeben, mit dem beliebige messende Tastköpfe, insbesondere auch Tastköpfe, deren Führungen nicht parallel zu den Koordinatenachsen des Koordinatenmessgerätes ausgerichtet sind und deren elastische Eigenschaften unterschiedlich sind, an ein Koordinatenmessgerät angekoppelt werden können.

Die Aufgabe wird erfindungsgemäß dadurch gelöst, dass wenigstens ein Teil der Parameter zur linearen oder nichtlinearen Abbildung (Transformation) der von dem messenden Tastkopf ermittelten Auslenkungssignale in ein Koordinatensystem des Koordinatenmessgerätes Komponenten der Tastiftauslenkung beschreiben, die tangential zur Werkstückoberfläche im Berührpunkt stehen.

Die Besonderheit dieses Verfahrens ist darin zu sehen, dass nunmehr erfindungsgemäß speziell Komponenten in die Abbildung der Auslenkungssignale eingehen, die bei der Messung wie auch bei der Kalibrierung tangential zur Werkstückoberfläche im Berührpunkt stehen.

Bei dem Koordinatensystem des Koordinatenmessgerätes handelt es sich hierbei bevorzugt um das zentrale Maschinenkoordinatensystem, auf das bezogen alle Messungen stattfinden. Natürlich kann es sich alternativ aber auch um ein beliebiges anderes Koordinatensystem handeln, das in das Maschinenkoordinatensystem transformiert werden kann.

Obwohl sich das erfindungsgemäße Verfahren besonders für Tastköpfe eignet, die keine Führungen aufweisen, welche parallel zu den Koordinatenrichtungen des Koordinatenmessgerätes ausgerichtet sind, lässt sich das Verfahren selbstverständlich auch für beliebige herkömmliche Tastköpfe einsetzen, bei denen die Führungen beispielsweise parallel zu den Koordinatenrichtungen ausgerichtet sind.

Anstelle des Begriffes "Transformation" der Auslenkungssignale wurde hierbei der wesentlich allgemeinere Begriff "lineare oder nichtlineare Abbildung" verwendet, da der Begriff "Transformation" lediglich speziell die Abbildung von Vektoren im euklidischen Raum auf Vektoren im euldidischen Raum beschreibt. Euklidischer Raum ist hierbei der bekannte dreidimensionale Raum, dessen Vektoren sich über die Koordinaten x, y und z in einem kartesischen Koordinatensystem beschreiben lässt. Eine solche Abbildung ist zwar gegeben, wenn die Auslenkung des Taststiftes in den drei Koordinatenrichtungen gemessenen wurden. Für den Fall eines Taster jedoch, bei dem die Auslenkung in einer Koordinatenrichtung beispielsweise als Rotation des Taststiftes gemessen wird, bilden die Auslenkungssignale ersichtlich keinen Vektor im euklidischen Raum.

Obwohl die besagten Parameter, die die tangentialen Komponenten der Taststiftauslenkung beschreiben, grundsätzlich in unterschiedlicher Form vorliegen können, beispielsweise als Parameter von Gleichungen, bilden diese vorteilhaft eine Matrix, insbesondere eine Rotationsmatrix.

Um die Parameter, die die tangentialen Komponenten der Taststiftauslenkung beschreiben, bestimmen zu können, sollte bei der Kalibrierung am Kalibriernormal wenigstens eine der beiden nachfolgend genannten Zielfunktionen $Q_2$ oder $Q_3$ erfüllt werden:

- Zielfunktion $Q_2 = \sum \mathbf{v_i} \times \mathbf{n_i} \Rightarrow 0$ oder
- Zielfunktion $Q_3 = \sum (\mathbf{v_i} \times \mathbf{n_i})^2 \Rightarrow \text{Min}$

wobei hierin bedeuten:

$\mathbf{v}_i$ = Auslenkvektor der Tastkugel im i-ten Messpunkt
$\mathbf{n}_i$ = Normalenvektor im Berührpunkt der Tastkugel auf die Werkstückoberfläche (des Kalibriernormals) beim Messen im i-ten Messpunkt

Die Messpunkte $\mathbf{v_i}$ die zum Lösen der Zielfunktionen $Q_2$ oder $Q_3$ verwendet werden, sollten durch Abtasten mindestens eines Halbkreises an einem Kalibrierkörper aufgenommen werden. Das Abtasten eines einzigen Halbkreises ist hierbei jedoch nur ausreichend für den Fall, dass der Taster in zwei Koordinatenrichtungen ausgelenkt werden kann. In diesem Fall kann der Halbkreis beispielsweise an einem Lehrring oder an einer Kalibrierkugel abgetastet werden.

Für den Fall, dass der Taststift in allen drei Koordinatenrichtungen ausgelenkt werden kann, sollten möglichst gleichverteilt über eine Halbkugel Messwerte aufgenommen werden. Dies kann beispielsweise dadurch realisiert werden, indem mindestens drei unterschiedliche Halbkreise auf einer Kalibrierkugel gemessen werden, die auf einer Halbkugel liegen. Unter Halbkreisen sind hierbei drei Großkreise der Kalibrierkugel gemeint, also Kreise mit dem Durchmesser der Kalibrierkugel.

Die abgetasteten Messpunkte sollten hierbei so aufgenommen werden, dass diese gleichmäßig über den abgetasteten Halbkreis oder die Halbkugel verteilt sind.

Zur linearen oder nichtlinearen Abbildung der Tastkopfsignale können zusätzlich Parameter verwendet werden, die Komponenten der Taststiftauslenkung beschreiben, die normal zur Werkstückoberfläche im Berührpunkt stehen.

Auch diese Parameter können ebenfalls eine Matrix bilden, wobei diese bei der Kalibrirung im bekannter Weise mit der Ausgleichsbedingung aus der folgenden Zielfunktion zu bestimmen sind:

- Zielfunktion $Q_1 = \sum f_{n,i}^2 \Rightarrow \text{Min}$

wobei mit $f_{n,i}$ die Normalabweichungen, also die Abweichungen in normal auf die Werkstückoberfläche stehender Richtung im Berührpunkt (z. B. der Kalibrierkugel) bezeichnet sind.

Das Verfahren kann als Computerprogrammprodukt realisiert sein, das direkt in den internen Speicher einer digitalen Steuer- und Auswerteeinheit eines Koordinatenmessgerätes geladen werden kann und Softwareabschnitte umfasst, die das Verfahren durchführen können. Das Computerprogrammprodukt kann hierbei auf einem Datenträger, wie beispielsweise einer CD-Rom, einer DVD-Rom, einer Diskette, einer Festplatte oder einem USB-Speicherstift etc. gespeichert sein.

Weitere Vorteile und Weiterbildungen der Erfindung ergeben sich im Folgenden aus der Figurenbeschreibung. Hierin zeigen:

Figur 1: ein Koordinatenmessgerät, das das erfindungsgemäße Verfahren ausführen kann

Figur 2a-2c: eine schematische Darstellung einer Tastkopfmechanik, bei der der Taststift in einer Koordinatenrichtung (z) über eine Linearführung geführt ist und in die beiden anderen Koordinatenrichtungen über ein Kardangelenk drehbeweglich geführt ist.

Figur 3: rein schematische Darstellung von unterschiedlichen Größen eines Tastkopfes mit der Kinematik des Tastkopfes gem. Figuren 2a bis 2c

Figur 4: rein schematische Darstellung der Vektorverhältnisse bei der Antastung einer Kalibrierkugel (15)

Figur 5:        Darstellung des Winkels ($\epsilon$) zwischen Messkraft ($\mathbf{F}_M$) und Tasterauslenkung (**v**)

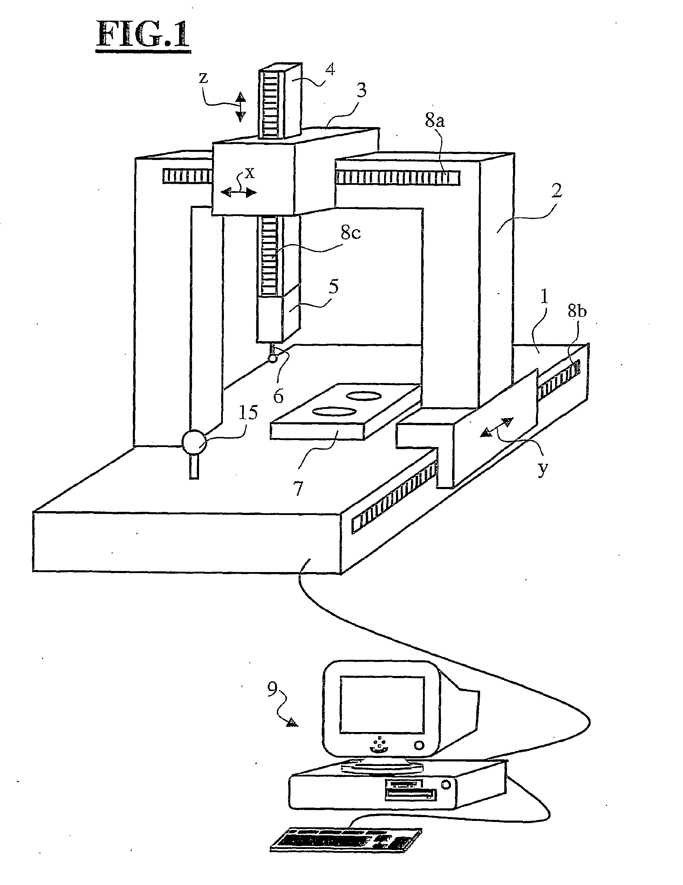

Figur 1 zeigt ein erfindungsgemäßes Koordinatenmessgerät, auf dem das erfindungsgemäße Verfahren durchgeführt werden kann. Das Koordinatenmessgerät weist einen Messtisch (1) auf, auf dem ein zu vermessendes Werkstück (7) gelagert werden kann. Entlang des Messtisches (1) kann in der mit dem Pfeil (Y) bezeichneten Richtung motorisch ein Portal (2) Verfahren werden, dessen genaue Position an einem Maßstab (8b) abgetastet werden kann. Entlang der Traverse des Portals (2) ist ein X-Schlitten (3) in der mit dem Pfeil (X) bezeichneten Richtung motorisch verschiebbar gelagert, wobei dessen Position durch Abtasten des Maßstabes (8a) ermittelt werden kann. Der X-Schlitten (3) lagert eine Pinole (4) in der mit dem Pfeil (Z) bezeichneten Richtung beweglich, wobei auch die Pinole (4) motorisch verstellt werden kann. Die genaue Position der Pinole (4) kann durch Abtasten des Maßstabes (8c) bestimmt werden. Am unteren Ende der Pinole (4) ist ein sogenannter messender Tastkopf (5) befestigt, an dem ein in den drei Koordinatenrichtungen (x, y und z) beweglich gelagerter Taststift (6) befestigt ist.

Zur Steuerung des Koordinatenmessgerätes und zur Auswertung der hierbei aufgenommenen Messdaten ist eine Steuer- und Auswerteeinheit (9) vorgesehen, die in dem konkreten Koordinatenmessgerät als Personal Computer ausgeführt ist.

Selbstverständlich ist das hier in Figur 1 gezeigte Koordinatenmessgerät nur eine von vielen unterschiedlichen Möglichkeiten. Beispielsweise kann die Mechanik zum Bewegen des Tastkopfes (5) völlig anders ausgestaltet sein. An Stelle des hier beispielhaft gezeigten Portalaufbaus kann auch beispielsweise ein Ständeraufbau verwendet werden, bei dem ein horizontal auskragender Messarm an einem vertikal ausgerichteten Ständer beweglich geführt ist. Des weiteren kann anstelle des Tastkopfes (5) auch das Werkstück (7) in einer oder mehreren Koordinatenrichtungen bewegt werden, indem der Messtisch (1) in dem betreffenden Richtungen Verfahren wird. Anstelle der linear verfahrbaren Messschlitten (2,3,4) können gleichfalls auch Drehgelenke vorgesehen werden. Natürlich kann auch die Steuer- und Auswerteeinheit anders aufgebaut sein und beispielsweise zweiteilig aufgebaut sein aus einem Messrechner und einem separaten Steuerschrank.

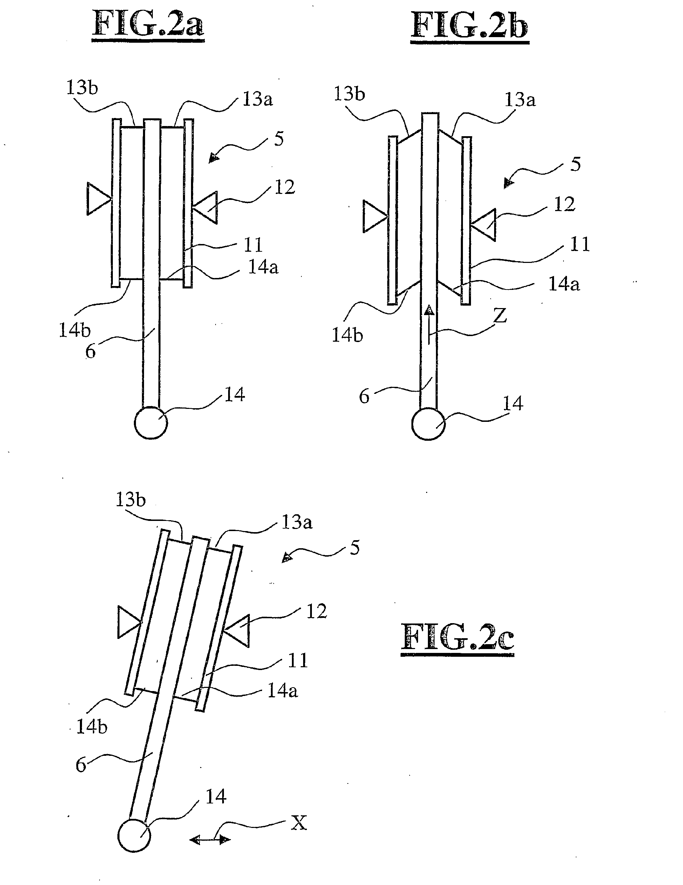

Der Aufbau des in Figur 1 mit dem Bezugszeichen (5) bezeichneten messenden Tastkopf, der hierbei ebenfalls rein beispielhaft und nur sehr schematisch gezeigt ist, ist in den Figuren 2a bis 2b dargestellt. Wie hieraus zu sehen, ist der Taststift (6) über Blattfedern (13a, 13b, 13c) und (14a, 14b, 14c) in der mit dem Pfeil (Z) gezeigten Richtung, wie dies aus Figur 2b zu sehen ist, in einem Hohlzylinder (11) linear geführt. Die Blattfedern (13a bis 13c) und (14a bis 14c) sind in einem Winkel von 120° versetzt zueinander sternförmig angeordnet, so dass die Blattfedern (13c und 14c) nicht zu sehen sind. Der Hohlzylinder (11) wiederum ist über ein schematisch dargestelltes Kardangelenk (12) drehbeweglich am Tastkopfgehäuse des Tastkopfes (5) befestigt. Das Kardangelenk kann beispielsweise als runde Blattfedermembran ausgestaltet sein, die durch entsprechende Aussparungen die entsprechende Drehbeweglichkeit ermöglicht. Eine entsprechende Bewegung in der mit dem Pfeil (X) bezeichneten Koordinatenrichtung ist in Figur 2c zu sehen. Die Bewegung des Taststiftes in der dritten Koordinatenrichtung (Richtung Y), die lotrecht zur Blattebene steht, erfolgt vollkommen analog zu Figur 2c.

Selbstverständlich ist auch der hier gezeigte Aufbau des messenden Tastkopfes (5) nur rein beispielhaft. Beispielsweise könnte die Mechanik zur beweglichen Lagerung des Taststiftes (6) auch drei nacheinander angeordnete Federparallelogramme aufweisen, die den Taststift (6) in den drei Koordinatenrichtungen linear führen.

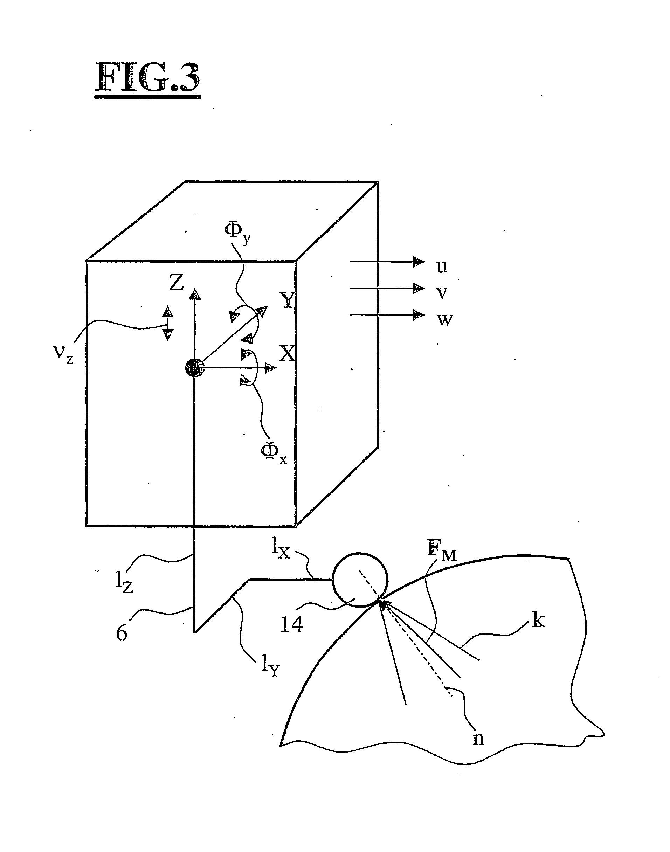

Figur 3 zeigt eine rein schematische Darstellung der Verhältnisse eines Tastkopfes (5) gem. Figur 2a bis 2c mit einem von der Geometrie her verallgemeinerten Taststift (6). Der Taststift (6) muss hierbei natürlich nicht, wie in den Figuren 1 und 2a bis 2c gezeigt, ausschließlich in der mit dem Pfeil (Z) bezeichneten Richtung ausgerichtet sein, sondern kann auch eine andere Geometrie annehmen, beispielsweise als Sterntaster ausgebildet sein. Die Ausdehnungen des Taststiftes werden hierbei mit ($l_X, l_Y, l_Z$) bezeichnet. Die lineare elastische Nachgiebigkeit des Taststiftes (6) aufgrund der Blattfedern (13a bis 13c und 14a bis 14c) in der mit dem Pfeil (Z) bezeichneten Koordinatenrichtung wird hierbei mit ($\nu_Z$) bezeichnet. Eine Auslenkung des Taststiftes (6) gegenüber dem Tastkopf (5) in der Koordinatenrichtung (Y) ergibt hingegen eine Rotation um die mit (X) bezeichnete Achse. Die sich diesbezüglich durch die betreffende Blattfedermembran (12) ergebende elastische Rotationsnachgiebigkeit wird mit ($\Phi_X$) bezeichnet. Eine Auslenkung des Taststiftes (6) in der Koordinatenrichtung (X) ergibt eine Rotation um die mit (Y) bezeichnete Achse. Die sich diesbezüglich durch die betreffende Blattfedermembran (12) ergebende elastische Rotationsnachgiebigkeit wird mit ($\Phi_Y$) bezeichnet. Die betreffenden elektrischen Signale, die durch hier nicht näher dargestellte Sensoren aufgenommen werden, wie beispielsweise durch induktiv arbeitende Sensoren, wie beispielsweise LVDTs (Linear Variable Differential Transformer) oder durch Inkrementalmaßstäbe oder durch Interferometer erfasst werden. Die betreffenden Signale werden durch die Bezugszeichen (u, v, w) bezeichnet. Die elektrischen Übertragungsfaktoren der Sensoren werden für den hier vorliegenden Fall linearer Sensorkennlinien mit ($k_x$, $k_y$, $k_z$) bezeichnet.

Es wird an dieser Stelle ausdrücklich darauf hingewiesen, dass in dem hier vorgestellten Ausführungsbeispiel ein Modell verwendet wird, bei dem die Auslenkungssignale ($s=\{u,v,w\}$) von den Sensoren im Tastkopf aufgrund linearer Sensorkennlinien erzeugt wurden. Die Sensorkennlinien können entweder bereits physikalisch linear sein oder durch Korrekturwerte linearisiert werden, die in einem vorgeschalteten Kalibriervorgang aufgenommen wurden.

Selbstverständlich ist die Erfindung jedoch nicht auf lineare Sensorkennlinien beschränkt. Alternativ können die mathematischen Modelle auch so abgewandelt werden, dass hiermit auch nichtlineare Sensorkennlinien verarbeitet werden können.

Mit ($F_M$) ist hierbei die von der Tastkugel (14) auf das Werkstück (7) ausgeübte Messkraft bezeichnet. Die Messkraft kann hierbei ebenfalls unterschiedlich aufgebracht werden, beispielsweise durch Federn, die bei der Auslenkung des Taststiftes aus seiner Ruhelage gespannt werden oder durch induktiv arbeitende Tauchspulenantriebe, die in der betreffenden Koordinatenrichtung eine Kraft generieren. Mit (**n**) ist hierbei die Flächennormale im Messpunkte bezeichnet, also die Normalenrichtung auf die Werkstückoberfläche in dem Punkt, in dem die Tastkugel (14) die Oberfläche des Werkstückes (7) berührt. Mit dem Bezugszeichen (k) ist der so genannter Reibungskegel bezeichnet. Dieser bezeichnet alle möglichen Ausrichtungen der Messkraft ($F_M$), die sich bei einer Antastung aufgrund der Reibungskraft zwischen der Tastkugel (14) und der Werkstückoberfläche prinzipiell ergeben können. Wäre die Reibung zwischen der Tastkugel (14) und dem Werkstück (7) Null, so müsste die Messkraft ($F_M$) exakt entlang der Flächennormale (**n**) ausgerichtet sein. Da dies jedoch aufgrund der tatsächlich existierenden Reibungskraft nicht der Fall ist, kann die Messkraft ($F_M$) im Bereich des Reibungskegels (k) um die Flächennormale (**n**) herum variieren.

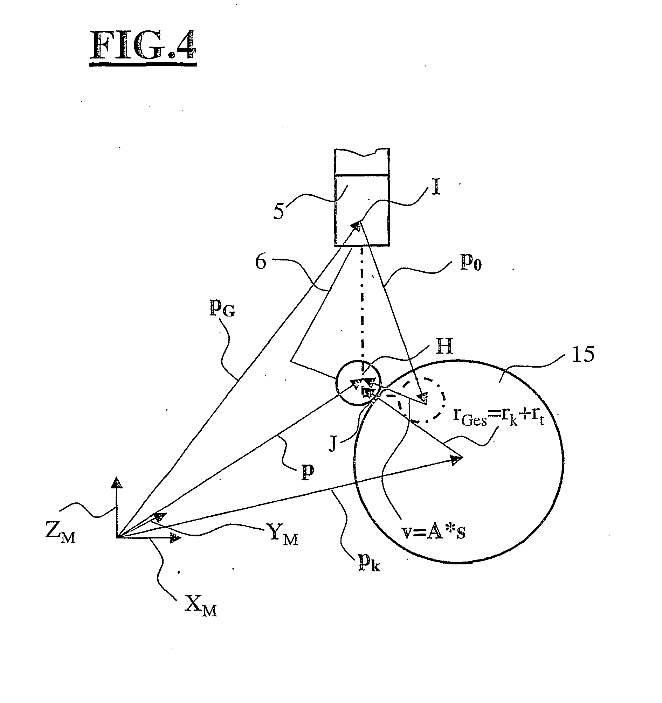

Für einen derartigen Tastkopf gilt nunmehr, wie dies aus Figur 4 ersichtlich ist, in einem Koordinatenmessgerät gem. Figur 1 die nachfolgende Matrizengleichung:

$$\mathbf{p} = \mathbf{p}_G + \mathbf{A} \cdot \mathbf{s} + \mathbf{p}_0 = \mathbf{p}_G + \mathbf{v} + \mathbf{p}_0 \qquad (1)$$

Die in Gleichung (1) verwendeten Bezeichnungen haben folgende Bedeutung:

**p** tatsächliche Koordinaten $\{X_H, Y_H, Z_H\}$ eines Messpunktes (H) gemessen im Maschinenkoordinatensystem ($X_M$, $Y_M$, $Z_M$) des Koordinatenmessgerätes

$\mathbf{p}_G$ vom Koordinatenmessgerät durch Ablesen der Maßstäbe (8a bis 8c) ermittelte Messkoordinaten $\{X_G, Y_G, Z_G\}$ bis zu einem vordefinierten Punkt (I) im Bereich des Tastkopfes (5)

$\mathbf{p}_0$ Offsetvektor von dem vordefinierten Punkt (I) im Bereich des Tastkopfes (5) zum Mittelpunkt der Tastkugel (14) in ihrer Ruhelage

**v** Auslenkungsvektor der Tastkugel (14) aus ihrer Ruhelage

**A** Tastermatrix

**s** Signalvektor $\{u,v,w\}$ der Sensoren im Tastkopf (5), die die Taststiftauslenkung des Taststiftes (6) messen

Wie aus Figur 4 zu sehen, wird in dem hier gezeigten Beispiel von der Tastkugel (14) die Kalibrierkugel (15) angetastet. Die strichlinierte Linie zeigt hierbei die Position des Taststiftes (6) und der hieran befestigten Tastkugel (14) in der Ruheposition, während die ausgezogene Darstellung den aufgrund der Antastung ausgelenkten Taststift (6) und die hieran befestigte Tastkugel (14) zeigt. Die tatsächlichen Koordinaten ($X_H, Y_H, Z_H$) eines Vektors (**p**) zum Messpunkt (H) bestimmt im zentralen Maschinenkoordinatensystem ($X_M$, $Y_M$, $Z_M$) des Koordinatenmessgerätes ergibt sich, wie auch Gleichung (1) dies zeigt, durch die Summe des Vektors ($\mathbf{p}_G$), des Vektors ($\mathbf{p}_0$) und des Vektors (**v**), der sich aus dem Produkt des Signal vektors (s) und der Tastermatrix (**A**) ergibt.

Es sei an dieser Stelle angemerkt, dass der Vektor (**p**), der den Messpunkt (H) bezeichnet, zum Mittelpunkt der Tastkugel (14) zeigt. Der tatsächliche Velctor $\mathbf{p}_J$ (aus Gründen der Übersichtlichkeit nicht in Figur 4 zu sehen) zum Punkt (J), an dem die Tastkugel (14) das Werkstück (7) in einem späteren Messablauf berührt, bzw. hier die Kalibrierkugel (15) im Kalibriervorgang berührt, muss durch zusätzliche Addition eines hier nicht näher gezeigten Vektors geschehen, der sich aus der Multiplikation des Tastkugelradius ($r_t$) und dem Normalenvektor (**n**) (die im Berührpunkt zwischen Tastkugel (14) und Werkstück (7) sich ergebende Normalenrichtung in der Werkstückoberfläche) ergibt, wie nachfolgende Gleichung 2 dies zeigt:

$$\mathbf{p}_J = \mathbf{p} + r_t * \mathbf{n} \qquad (2)$$

Die Tastermatrix (**A**), wie sie beispielhaft für den in Figur 2a bis 2c und Figur 3 dargestellten Tastkopf (5) erforderlich ist, ergibt sich hierbei wie folgt:

$$A = \left( \begin{array}{c} \dfrac{k_x \cdot l_x{}^2 \cdot \Phi_Y}{l_z \cdot \nu_z} - \dfrac{k_x(l_z{}^2 \cdot \nu_z \cdot \Phi_x + l_x{}^2 \cdot l_z{}^2 \cdot \Phi_x \cdot \Phi_y)}{l_z{}^3 \cdot \nu_z \cdot \Phi_x} \\[2em] 0 \\[1em] \dfrac{k_z \cdot l_x}{l_z} \end{array} \right.$$

$$\left. \begin{array}{cc} 0 & 0 \\[1.5em] \dfrac{k_y \cdot l_y{}^2 \cdot \Phi_x}{l_z \cdot \nu_z} - \dfrac{k_Y(l_z{}^2 \cdot \nu_z \cdot \Phi_Y + l_y{}^2 \cdot l_z{}^2 \cdot \Phi_x \cdot \Phi_y)}{l_z{}^3 \cdot \nu_z \cdot \Phi_Y} & 0 \\[1.5em] \dfrac{k_z \cdot l_Y}{l_z} & k_z \end{array} \right)$$

Da die bestimmten Koordinaten eines Messpunktes in der Regel nur bis zum Mittelpunkt der Tastkugel (14) bestimmt werden, ist zur Bestimmung eines tatsächlich angetasteten Punktes auf der Werkstückoberfläche, wie oben bereits erläutert, zusätzlich noch der Radius $(r_t)$ bzw. der Durchmesser $(d_t)$ der Tastkugel (14) erforderlich.

Die hier beispielhaft für den Tastkopf (5) benannten 13 Unbekannten, nämlich die drei Komponenten des Offsetvektors $(\mathbf{p_0})$, neun Komponenten der Matrix $(\mathbf{A})$ sowie der Tastkugeldurchmesser $(d_t)$ wurden in der Vergangenheit wie folgt bestimmt.

In einem ersten Schritt wird die Kalibrierkugel (15) in einer Vielzahl von Messpunkten i= 1..n angetastet, wobei aus den jeweils bestimmten Messkoordinaten $p_{Gi}=\{X_{Gi}, Y_{Gi}, Z_{Gi}\}$ und den zugehörigen hierbei vom Tastkopf (5) gemessenen Signalvektoren $s_i=\{u_i, v_i, w_i\}$ mittels geeigneter Kalibrieralgorithmen die betreffenden Parameter des Offsetvektors $(\mathbf{p_0})$, der Matrix $(\mathbf{A})$ sowie des Tastkugeldurchmessers $(d_t)$ bestimmt werden. Durch diesen Tastkugeldurchmesser $(d_t)$ bzw. den daraus ermittelten Tastkugelradius $(r_t)$ kann dann in einem späteren Messablauf, wie oben beschrieben, unter Zuhilfenahme des Normaleneinheitsvektors $(\mathbf{n})$ der genaue Messpunkt (J) ermittelt werden.

Da bei der Messung die Tastkugel (14) das zu vermessene Werkstück (7) beziehungsweise im Falle der Kalibrierung, die Kalibrierkugel (15), grundsätzlich in Normalenrichtung angetastet, wird die Kalibrierung üblicherweise als Best-Fit-Routine nach Gauss mit dem Ziel der Minimierung der Fehlerquadratsumme der Normalabweichungen $(f_{ni}{}^2)$ zur Kalibrierkugel ausgeführt entsprechend nachfolgender Zielfunktion:

$$Q_1 = \sum f_{n,i}^2 \Rightarrow Min \qquad\qquad (3)$$

Wie man sich leicht anhand von Figur 4 klar machen kann, liegen beim kalibrierten Tastkopf alle Messpunkte $\mathbf{p_i}$, mit i= 1..n, wobei n > 13 auf einer Kugel mit dem Radius $r_{Ges}= r_k+r_t$, wobei $(r_K)$ der Radius der Kalibrierkugel (15) ist und $(r_t)$ der Radius der Tastkugel (14) ist. Mit dem Ortsvektor $(\mathbf{p_K})$ des Kugelmittelpunktes der Kalibrierkugel (15), der beispielsweise zu einem früheren Zeitpunkt eingemessen wurde, ergibt sich für einen Fehler $(f_{n,i})$, der in Gleichung (3) einzusetzen ist nachfolgendes:

$$\begin{aligned} f_{n,i} &= \left| \mathbf{p}_i - \mathbf{p}_k \right| - (r_k + r_t) \\ &= \left| \mathbf{p}_{Gi} + p_0 + \mathbf{A}\, s_i - \mathbf{p}_k \right| - (r_k + r_t) \end{aligned} \qquad (4)$$

Es sei an dieser Stelle darauf hingewiesen, dass der Index (i) in der Anmeldung einen Laufindex darstellt und jeweils den i-ten Messpunkt mit i=1..n bezeichnet.

Es zeigt sich jedoch, dass die Auflösung des zugehörigen Normalengleichungssystems mit dem üblichen Lösungsverfahren nicht möglich ist, da die Matrix des Normalengleichungssystems singulär ist. Auch robusten Quadratmittelungsverfahren, beispielsweise nach Householder, liefern nur in Ausnahmefällen eine Lösung. Die Ursache für diese Singularität liegt darin begründet, dass in der Tastermatrix (A) drei Koeffizienten enthalten sind, die nur für die Taststiftauslenkung tangential zur Oberfläche der Kalibrierkugel (15) im Berührpunkt zuständig sind. Diese Tangentialkomponenten werden aber von der Zielfunktion gemäß Gleichung (3) nicht, oder nur klein von 2. Ordnung, erfasst, sodass das Normalgleichungssystem aus Gleichung (3) letztlich prinzipiell unbestimmt ist. Im Fall von herkömmlichen Tastköpfen mit drei rechtwinklig angeordneten Geradführungen (z. B. Parallelfederführungen) mit weitgehend übereinstimmender Steifigkeit und linearen Sensoren ist diese Singularität in der Vergangenheit nicht aufgetreten.

In erfindungsgemäßer Weise wird deshalb die Tastermatrix (A) so geändert, dass wenigstens ein Teil der Parameter speziell Komponenten der Taststiftauslenkung beschreiben, die tangential zur Werkstückoberfläche im Berührpunkt stehen. Dazu wird die Tastermatrix wie folgt in zwei Komponenten aufgeteilt:

$$A_{sym} = 0{,}5\ (A + A^T) \tag{5}$$

$$A_{anti} = 0{,}5\ (A - A^T) \tag{6}$$

$A^T$ ist hierin die Transponierte Matrix von $A$. Hierdurch ergeben sich nachfolgende Matrizen:

$$A_{sym} = \begin{pmatrix} a_{11} & a_{12} & a_{13} \\ a_{12} & a_{22} & a_{23} \\ a_{13} & a_{23} & a_{33} \end{pmatrix} \qquad A_{anti} = \begin{pmatrix} 0 & b_{12} & b_{13} \\ -b_{12} & 0 & b_{23} \\ -b_{13} & -b_{23} & 0 \end{pmatrix} \tag{7}$$

die nach unterschiedlichen Zielfunktionen zu bestimmen sind. Zwischen den beiden Matrizen $A_{sym}$ und $A_{anti}$ und der Tastermatrix A besteht folgender Zusammenhang:

$$A = A_{sym} + A_{anti} \tag{8}$$

Diese beiden Komponenten der Tastermatrix sind:

- die symmetrische Tastermatrix $A_{sym}$, die im Zusammenwirken mit den elastischen Eigenschaften des Tasters die Komponente der Tasterauslenkung beschreibt, die normal zur Werkstückoberfläche im Berührpunkt (J) steht, und

- die anti symmetrische Tastermatrix $A_{anti}$, die letztlich als Rotationsmatrix Komponenten der Tasterauslenkung bewirkt, die tangential zur Werkstückoberfläche im Berührpunkt (J) steht.

Mit der Zielfunktion nach Gleichung (3) können nur die Koeffizienten der Matrix $A_{sym}$ eindeutig bestimmt werden. Da die antisymmetrische Matrix ($A_{anti}$) nur Tangentialkomponenten der Auslenkung bewirkt, muss somit zur Bestimmung der antisymmetrischen Matrix eine weitere Zielfunktion eingeführt werden.

Im Fall von Tastköpfen mit drei orthogonalen Geradführungen mit weitgehend übereinstimmender Steifigkeit und linearen Sensoren sind die antisymmetrischen Koeffizienten $\{b_{12}, b_{13}, b_{23}\}$ vernachlässigbar klein. Nur in diesem Sonderfall war die Kalibrierung eines Tastkopfes auf der Grundlage der üblichen Gaußschen Zielfunktion ($Q_1$) stabil lösbar.

Eine Zielfunktion für die zweite Matrix ($A_{anti}$) läßt sich nicht unmittelbar aus den Meßwerten ableiten, da ja die tangentialen Verschiebungen der Tastkugel (14) auf der Kalibrierkugel (15) weder nach Größe noch nach Richtung genau bekannt sind und des weiteren durch die Reibung ohnehin unbestimmt sind. Es müssen also andere Bedingungen eingeführt werden, die sowohl die elastischen als auch alle anderen Eigenschaften des Tastkopfes (5) (Übertragungskoeffizienten und Anordnung der Signalwandler) bei der Antastung der Kalibrierkugel (15) einschließen.

Grundlage für die Ableitung der Zielfunktion für die Tangentialabweichungen ist darin zu sehen, dass sich im Idealfall im Berührpunkt (J) der Meßkraftvektor ($F_M$) in Normalenrichtung zur Meßfläche einstellt und damit hinsichtlich seiner Richtung bekannt ist.

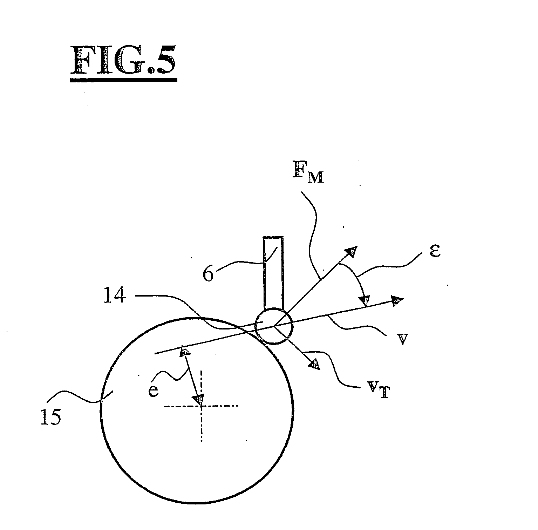

Natürlich gilt dies nur näherungsweise, da die Messkraft ($F_M$), wie bereits oben beschrieben, nicht exakt normal zur Werkstückoberfläche im Berührpunkt (J) steht, sondern irgendwie innerhalb des Reibungskegels (k). Der Auslenk-vektor $v = \{v_x, v_y, v_z\}$ schließt im allgemeinen Fall einen Winkel ($\varepsilon$) mit dem Kraftvektor ($F_M$) ein (siehe Figur 5), der Werte annehmen kann, die wesentlich größer als der Reibungskegel (k) sind und fast 90° annehmen können, so dass zwangsläufig eine Tangentialkomponente ($v_t$) des Auslenkvektors ($v$) entsteht, die im allgemeinen Fall stets ungleich Null ist.

Diese Tangentialkomponente ($v_r$) liegt in der Tangentialebene und kann als Vektorprodukt $v_t = v \times n$ von Aus-lenkvektor ($v$) und Normalenvektor ($n$) berechnet werden. Dabei kann das Vektorprodukt ($v_t$) auch als Momentenvektor des Vektors ($v$) mit dem Hebelarm ($e$) interpretiert werden. Für ein linear elastisches System gilt nun die Tatsache, dass dieser Vektor ($v_t$) im Mittel über alle Punkte der antastbaren Hälfte der Kalibrierkugel gerade den Nullvektor ergibt

$$\int_{\text{Halbkugel}} v_t \, dA = \begin{pmatrix} 0 & 0 & 0 \end{pmatrix}^T \qquad (9)$$

Im Falle antisymmetrischer Zusatzglieder in der Matrix ($A$) verbleibt im Mittel der folgende Ausdruck

$$\int_{\text{Halbkugel}} v_t \, dA = \frac{4\,\pi}{3} \begin{pmatrix} -b_{23} & b_{13} & -b_{12} \end{pmatrix}^T \qquad (10)$$

Näherungsweise gilt die Gleichung (9) auch dann, wenn die Kalibrierkugel in hinreichend vielen und gleichmäßig über der Halbkugel verteilten Punkten mit gleicher Kraft angetastet wird.

$$\sum \left( v \times n \right) \approx 0 \qquad (11)$$

Aus dieser Bedingung läßt sich nun eine zweite Zielfunktion für die Bestimmung der drei Koeffizienten $\{b_{12}, b_{13}, b_{23}\}$ der antisymmetrischen Matrix wie folgt ableiten:

- Meßbedingung:

  Bei der Kalibrierung sind an der Kalibrierkugel hinreichend viele Punkte gleichverteilt über eine Halbkugel zu messen;

- Ausgleichsbedingung und Zielfunktion:

  Die Summe der Momente der Auslenkvektoren um die drei Achsen der Kalibrierkugel müssen sich zu Null summieren, oder (näherungsweise) die Summe der Quadrate der Momente um die drei Achsen müssen ein Minimum ergeben.

Daraus folgen die beiden sinnvollen Zielfunktionen $Q_2$ und $Q_3$ für die gesuchten Koeffizienten.

$$Q_2 = \sum v_i \times n_i \Rightarrow 0 \qquad (12)$$

$$Q_3 = \sum \left( v_i \times n_i \right)^2 \Rightarrow Min \qquad (13)$$

mit

$\mathbf{v_i}$     i-ter Auslenkvektor der Tastkugel (14)

$\mathbf{n_i}$     i-ter Normalenvektor zur Kalibrierkugel (15) durch den i-ten Meßpunkt

Die vorstehenden Erläuterungen machen deutlich, dass beide Zielfunktionen nur Näherungslösungen für die Koeffizienten $\{b_{12}, b_{13}, b_{23}\}$ liefern können, und dass sie nur im Grenzfall sehr vieler und gleichmäßig verteilter Messpunkte eine vollständige Lösung liefern. Die Entscheidung zwischen den beiden möglichen Zielfunktionen (dabei ist $Q_2$ der korrekte Ansatz) sowie für die Anzahl und Anordnung der Meßpunkte auf der Kalibrierkugel (15) ist aus experimentellen Ergebnissen abzuleiten.

Zur numerischen Realisierung der Tasterkalibrierung sind die Tasterparameter nach den beiden Zielfunktionen $Q_1$ und $Q_2$ bzw. $Q_3$ iterativ in einer Optimierungsrechnung zu verbessern, bis die Verbesserungen der Matrixkoeffizienten hinreichend klein sind. Ergebnis sind dann sowohl die neun Koeffizienten der Tastermatrix (A), der Tastkugeldurchmesser ($d_t$) sowie die Position ($\mathbf{p_0}$) des Tasteroffsets.

## Patentansprüche

1. Verfahren zur Messung von Messwerten auf einem Werkstück (7) mit einem Koordinatenmessgerät, das einen messenden Tastkopf (5) mit einem auslenkbaren Taststift (6) aufweist, mit folgenden Verfahrensschritt:

    - das Koordinatenmessgerät führt unter Verwendung von Parametern (A) eine lineare oder nichtlineare Abbildung der vom messenden Tastkopf (5) bestimmten Auslenkungssignale (s) in ein Koordinatensystem ($X_M, Y_M, Z_M$) des Koordinatenmessgerätes durch, wobei wenigstens ein Teil dieser Parameter ($A_{anti}$) Komponenten der Taststiftauslenkung beschreiben, die tangential zur Werkstückoberfläche im Berührpunkt stehen.

2. Verfahren nach Anspruch 1, wobei die Parameter ($A_{anti}$), die die tangentialen Komponenten der Taststiftauslenkung beschreiben, eine Matrix bilden, insbesondere eine Rotationsmatrix.

3. Verfahren nach Anspruch 1 oder 2, wobei zur Bestimmung der Parameter ($A_{anti}$), die die tangentialen Komponenten der Taststiftauslenkung beschreiben, wenigstens eine der beiden nachfolgenden Zielfunktionen $Q_2$ oder $Q_3$ erfüllt wird:

    - Zielfunktion $Q_2 = \sum \mathbf{v}_i \times \mathbf{n}_i \Rightarrow 0$ oder
    - Zielfunktion $Q_3 = \sum (\mathbf{v}_i \times \mathbf{n}_i)^2 \Rightarrow Min$

    wobei hierin bedeuten:

      $\mathbf{v}_i$ = Auslenkvektor der Tastkugel (14) im Messpunkt
      $\mathbf{n}_i$ = Normalenvektor im Berührpunkt der Tastkugel beim Messen

4. Verfahren nach Anspruch 3, wobei die Messpunkte, die zum Lösen wenigstens einer der genannten Zielfunktionen ($Q_2$ und/oder $Q_3$) verwendet werden durch Abtasten mindestens eines Halbkreises an einem Kalibrierkörper (15) aufgenommen werden.

5. Verfahren nach Anspruch 4, wobei die abgetasteten Messpunkte so aufgenommen werden, dass diese gleichmäßig über den abgetasteten Halbkreis oder ggf. über die abgetastete Halbkugel verteilt sind.

6. Verfahren nach Anspruch 4, wobei der Kalibrierkörper ein Kalibrierring oder eine Kalibrierkugel (15) ist.

7. Verfahren nach einem der vorhergehenden Ansprüche, wobei zur Abbildung der Auslenkungssignale. (s) zusätzlich Parameter ($A_{sym}$) verwendet werden, die Komponenten der Taststiftauslenkung beschreiben, die normal zur Werkstückoberfläche im Berührpunkt stehen.

8. Verfahren nach Anspruch 7, wobei die Parameter ($A_{sym}$), die die normalen Komponenten der Taststiftauslenkung beschreiben, ebenfalls eine Matrix bilden, und die in bekannter Weise mit der Gaußschen Ausgleichungsbedingung aus der folgende Zielfunktion zu bestimmen sind.

- Zielfunktion $Q_1 = \sum f_{n,i}^2 \Rightarrow \mathrm{Min}$

wobei $f_{n,i}$ die Normalabweichungen, also die Abweichungen in normal auf die Werkstückoberfläche stehender Richtung im Berührpunkt bezeichnen

9. Koordinatenmessgerät mit einem messenden Tastkopf und einem hieran beweglich befestigten Taststift (6), und einer Steuer- und Auswerteeinheit (9), wobei in der Steuer- und Auswerteeinheit (9) Parameter (A) gespeichert sind, und wobei die Steuer- und Auswertereinheit (9) dazu eingerichtet ist, über die Parameter (A) eine lineare oder nichtlineare Abbildung der vom messenden Tastkopf (5) bestimmten Auslenkungssignale (s) in ein Koordinatensystem ($X_M,Y_M,Z_M$) des Koordinatenmessgerätes zu berechnen, wobei wenigstens ein Teil dieser Parameter ($A_{anti}$) Komponenten der Taststiftauslenkung beschreiben, die tangential zur Werkstückoberfläche im Berührpunkt stehen.

10. Koordinatenmeßgerät nach Anspruch 9, wobei die in der Steuer- und Auswerteeinheit (9) gespeicherten Parameter ($\mathbf{A}_{anti}$), die die tangentialen Komponenten der Taststiftauslenkung beschreiben eine Matrix bilden, insbesondere eine Rotationsmatrix.

11. Koordinatenmeßgerät nach Anspruch 9 oder 10, wobei die Steuer- und Auswerteeinheit (9) zur Bestimmung der Parameter ($\mathbf{A}_{anti}$), die die tangentialen Komponenten der Taststiftauslenkung beschreiben wenigstens eine der beiden nachfolgenden Zielfunktionen $Q_2$ oder $Q_3$ erfüllen kann:

- Zielfunktion $Q_2 = \sum \mathbf{v}_i \times \mathbf{n}_i \Rightarrow 0$ oder
- Zielfunktion $Q_3 = \sum (\mathbf{v}_i \times \mathbf{n}_i)^2 \Rightarrow Min$

wobei hierin bedeuten:

$v_i$ = Auslenkvektor der Tastkugel im Messpunkt der Tastkugel
$n_i$ Normalenvektor im Berührpunkt der Tastkugel beim Messen

12. Koordinatenmeßgerät nach Anspruch 11, wobei die Steuer- und Auswerteeinheit (9) das Koordinatenmessgerät zur Aufnahme der Messwerten so steuert, dass die zum Lösen wenigstens einer der genannten Zielfunktionen ($Q_1$ und/oder $Q_2$) notwendigen Messpunkte durch Abtasten wenigstens eines Halbkreises an einem Kalibrierkörper (15) aufgenommen werden.

13. Koordinatenmeßgerät nach Anspruch 12, wobei die Steuer- und Auswerteeinheit (9) das Koordinatenmessgerät zur Aufnahme der Messwerte so steuert, dass diese gleichmäßig über den abgetasteten Halbkreis bzw. der Halbkugel verteilt sind.

14. Koordinatenmessgerät nach Anspruch 12, wobei der Kalibrierkörper ein Lehrring oder eine Kalibrierkugel (15) ist.

15. Koordinatenmessgerät nach einem der vorhergehenden Ansprüche 9 bis 14, wobei zur Abbildung der Auslenkungssignale ($s_i$) zusätzlich Parameter ($\mathbf{A}_{sym}$) verwendet werden, die Komponenten der Taststiftauslenkung beschreiben, die normal zur Werkstückoberfläche im Berührpunkt stehen.

16. Koordinatenmessgerät nach Anspruch 15, wobei die Parameter ($\mathbf{A}_{sym}$), die die normalen Komponenten der Taststiftauslenkung beschreiben, ebenfalls eine Matrix bilden.

17. Koordinatenmessgerät nach Anspruch 15 oder 16, wobei die Parameter ($\mathbf{A}_{sym}$) in bekannter Weise mit der Gaußschen Ausgleichungsbedingung aus der folgende Zielfunktion zu bestimmen sind.

- Zielfunktion $Q_1 = \sum f_{n,i}^2 \Rightarrow \mathrm{Min}$

wobei $f_{n,i}$ die Normalabweichungen, also die Abweichungen in normal auf die Werkstückoberfläche stehender Richtung im Berührpunkt bezeichnen

18. Computerprogrammprodukt, das direkt in den internen Speicher einer digitalen Steuer- und Auswerteeinheit (9) eines Koordinatenmessgerätes geladen werden kann und Softwarecodeabschnitte umfasst, mit denen unter Verwendung von Parametern (A) eine lineare Abbildung von Messwerten (s) eines messenden Tastkopfes (5) des Koordinatenmessgerätes in ein Koordinatensystem ($X_M$,$Y_M$,$Z_M$) des Koordinatenmessgerätes durchgeführt werden können, wobei wenigstens ein Teil der hierbei verwendeten Parameter ($\mathbf{A}_{anti}$) Komponenten der Taststiftauslenkung beschreiben, die tangential zur Werkstückoberfläche im Berührpunkt stehen.

19. Computerprogrammprodukt nach Anspruch 18, wobei dieses zusätzlich Softwarecodeabschnitte umfasst, über die das Koordinatenmessgerät so betrieben werden kann, dass das Verfahren gemäß einem der Ansprüche 2 bis 5 oder 7 oder 8 ausgeführt wird.

20. Maschinenlesbarer Datenträger mit einem Computerprogrammprodukt nach Anspruch 18 oder 19.

**Claims**

1. Method for measuring measured values on a workpiece (7) with the aid of a coordinate measuring machine which has a measuring probe head (5) with a deflectable stylus (6), having the following method step:

   - the coordinate measuring machine uses parameters (A) to carry out a linear or nonlinear mapping of the deflection signals (s), determined by the measuring probe head (5), into a coordinate system ($X_M$, $Y_M$, $Z_M$) of the coordinate measuring machine, at least some of said parameters ($\mathbf{A}_{anti}$) describing components of the stylus deflection which are tangential to the workpiece surface at the contact point.

2. Method according to Claim 1, in which the parameters ($\mathbf{A}_{anti}$) which describe the tangential components of the stylus deflection form a matrix, in particular a rotation matrix.

3. Method according to Claim 1 or 2, in which in order to determine the parameters ($A_{anti}$) which describe the tangential components of the stylus deflection, at least one of the two following target functions $Q_2$ or $Q_3$ is satisfied:

   - target function $Q_2 = \sum v_i \times n_i \Rightarrow 0$ or
   - target function $Q_3 = \sum (v_i \times n_i)^2 \Rightarrow$ Min

   with the following significations:

   $v_i$ = deflection vector of the probe ball (14) at the measurement point
   $n_i$ = normal vector at the contact point of the probe ball during measurement.

4. Method according to Claim 3, in which the measuring points, which are used to solve at least one of said target functions ($Q_2$ and/or $Q_3$), are picked up by scanning at least one semicircle on a calibration body (15).

5. Method according to Claim 4, in which the scanned measurement points are recorded such that they are distributed uniformly over the scanned semicircle or, if appropriate, over the scanned hemispheres.

6. Method according to Claim 4, the calibration body being a calibration ring or a calibration ball (15).

7. Method according to one of the preceding claims, in which in order to map the deflection signals (s), use is made in addition of parameters ($A_{sym}$) which describe components of the stylus deflection which are normal to the workpiece surface at the contact point.

8. Method according to Claim 7, in which the parameters ($A_{sym}$) which describe the normal components of the stylus deflection, likewise form a matrix, and which are to be determined in a known way with the aid of the Gaussian equalization condition from the following target function:

   - target function $Q_1 = \sum f_{n,i}^2 \Rightarrow$ Min,

   $f_{n,i}$ denoting the normal deviations, that is to say the deviations in a direction normal to the workpiece surface at the contact point.

9. Coordinate measuring machine having a measuring probe head and a stylus (6), movably fastened thereon, and a control and evaluation unit (9), parameters (A) being stored in the control and evaluation unit (9), and the control and evaluation unit (9) being set up to use the parameters (A) to calculate a linear or nonlinear mapping of the deflection signals (s), determined by the measuring probe head (5), into a coordinate system ($X_M$, $Y_M$, $Z_M$) of the coordinate measuring machine, at least some of said parameters ($A_{anti}$) describing components of the stylus deflection which are tangential to the workpiece surface at the contact point.

10. Coordinate measuring machine according to Claim 9, in which parameters ($A_{anti}$) stored in the control and evaluation unit (9), which describe the tangential components of the stylus deflection, describe a matrix, in particular a rotation matrix.

11. Coordinate measuring machine according to Claim 9 or 10, in which in order to determine the parameters ($A_{anti}$) which describe the tangential components of the stylus deflection, the control and evaluation unit (9) can satisfy at least one of the two following target functions $Q_2$ or $Q_3$:

 - target function $Q_2 = \sum v_i \times n_i \Rightarrow 0$ or
 - target function $Q_3 = \sum (v_i \times n_i)^2 \Rightarrow Min$

with the following significations:

 $v_i$ = deflection vector of the probe ball at the measurement point of the probe ball
 $n_i$ = normal vector at the contact point of the probe ball during measurement.

12. Coordinate measuring machine according to Claim 11, in which the control and evaluation unit (9) controls the coordinate measuring machine for recording the measured values such that the measurement points required to solve at least one of said target functions ($Q_1$ and/or $Q_2$) are picked up by scanning at least one semicircle on a calibration body (15).

13. Coordinate measuring machine according to Claim 12, in which the control and evaluation unit (9) controls the coordinate measuring machine for recording the measured values such that they are distributed uniformly over the scanned semicircle or hemisphere.

14. Coordinate measuring machine according to Claim 12, in which the calibration body is a ring gauge or a calibration ball (15).

15. Coordinate measuring machine according to one of the preceding Claims 9 to 14, in which in order to map the deflection signals (s), use is made in addition of parameters ($A_{sym}$) which describe components of the stylus deflection which are normal to the workpiece surface at the contact point.

16. Coordinate measuring machine according to Claim 15, in which the parameters ($A_{sym}$) which describe the normal components of the stylus deflection likewise form a matrix.

17. Coordinate measuring machine according to Claim 15 or 16, in which the parameters ($A_{sym}$) are to be determined in a known way with the aid of the Gaussian equalization condition from the following target function:

$$ \text{- target function } Q_1 = \sum f_{n,i}^2 \Rightarrow Min, $$

$f_{n,i}$ denoting the normal deviations, that is to say the deviations in a direction normal to the workpiece surface at the contact point.

18. Computer program product which can be loaded directly into the internal memory of a digital control and evaluation unit (9) of a coordinate measuring machine and comprises software code sections with the aid of which it is possible, by using parameters (A), to carry out a linear mapping of measured values (s) of a measuring probe head (5) of the coordinate measuring machine into a coordinate system ($X_M$, $Y_M$, $Z_M$) of the coordinate measuring machine, at least some of the parameters ($A_{anti}$) used in this case describing components of the stylus deflection which are tangential to the workpiece surface at the contact point.

**19.** Computer program product according to Claim 18, said computer program product additionally comprising software code sections via which the coordinate measuring machine can be operated such that the method in accordance with one of Claims 2 to 5 or 7 or 8 is executed.

**20.** Machine readable data carrier having a computer program product according to Claim 18 or 19.

**Revendications**

**1.** Procédé de mesure de valeurs de mesure sur une pièce à usiner (7) au moyen d'un appareil de mesure de coordonnées qui comprend une tête de mesure (5) comportant un palpeur (6) pouvant être dévié, comprenant l'étape de procédé suivante :

- l'appareil de mesure de coordonnées effectue une projection linéaire ou non linéaire des signaux de déviation (s) déterminés par la tête de mesure (5) dans un système de coordonnées ($X_M$, $Y_M$, $Z_M$) de l'appareil de mesure de coordonnées en utilisant des paramètres (A), dans lequel au moins une partie de ces paramètres ($A_{anti}$) décrivent des composantes de la déviation du palpeur qui sont tangentes à la surface de la pièce à usiner au point de contact.

**2.** Procédé selon la revendication 1, dans lequel les paramètres ($A_{anti}$) qui décrivent les composantes tangentielles de la déviation du palpeur forment une matrice, notamment une matrice de rotation.

**3.** Procédé selon la revendication 1 ou 2, dans lequel, pour déterminer les paramètres ($A_{anti}$) qui décrivent les composantes tangentielles de la déviation du palpeur, au moins l'une des deux fonctions cibles suivantes $Q_2$ ou $Q_3$ est respectée :

- fonction cible $Q_2 = \sum \mathbf{v}_i \times \mathbf{n}_i \Rightarrow 0$ ou
- fonction cible $Q_3 = \sum (\mathbf{v}_i \times \mathbf{n}_i)^2 \Rightarrow Min$

où

$v_i$ = vecteur de déviation de la bille de palpeur (14) au point de mesure
$n_i$ = vecteur normal au point de contact de la bille de palpeur lors de la mesure.

**4.** Procédé selon la revendication 3, dans lequel les points de mesure qui sont utilisés pour la résolution d'au moins l'une desdites fonctions cibles ($Q_2$ et/ou $Q_3$) sont acquis par analyse d'au moins un demi-cercle sur un corps d'étalonnage (15).

**5.** Procédé selon la revendication 4, dans lequel les points de mesure analysés sont acquis de manière à ce qu'ils soient uniformément répartis sur le demi-cercle analysé ou éventuellement sur l'hémisphère analysé.

**6.** Procédé selon la revendication 4, dans lequel l'étalonnage est un anneau d'étalonnage ou une bille d'étalonnage (15).

**7.** Procédé selon l'une quelconque des revendications précédentes, dans lequel on utilise en outre pour la projection des signaux de déviation (s) des paramètres ($A_{sym}$) qui décrivent des composantes de la déviation du palpeur qui sont normales à la surface de la pièce à usiner au point de contact.

**8.** Procédé selon la revendication 7, dans lequel les paramètres ($A_{sym}$) qui décrivent les composantes de la déviation du palpeur forment également une matrice, et peuvent être déterminés d'une manière connue au moyen de la condition d'égalité gaussienne à partir de la fonction cible suivante :

- fonction cible $Q_l = \sum f_{n,i}^2 \Rightarrow Min$

où les $f_{n,i}$ représentent les écarts types, et par conséquent les écarts dans une direction normale à la surface de la pièce à usiner au point de contact.

**9.** Appareil de mesure de coordonnées comportant une tête de mesure et un palpeur (6) fixé de manière mobile à celle-ci, et une unité de commande et d'évaluation (9), dans lequel des paramètres (A), sont stockés dans l'unité de commande et d'évaluation (9) et dans lequel l'unité de commande et d'évaluation (9) est apte à calculer au moyen des paramètres (A) une projection linéaire ou non linéaire des signaux de déviation (s) déterminés par la tête de mesure (5) dans un système de coordonnées ($X_M$, $Y_M$, $Z_M$) de l'appareil de mesure de coordonnées, dans lequel au moins une partie de ces paramètres ($\mathbf{A}_{anti}$) décrivent des composantes de la déviation du palpeur qui sont tangentes à la surface de la pièce à usiner au point de contact.

**10.** Appareil de mesure de coordonnées selon la revendication 9, dans lequel les paramètres ($\mathbf{A}_{anti}$) stockés dans l'unité de commande et d'évaluation (9) qui décrivent les composantes tangentielles de la déviation du palpeur forment une matrice, notamment une matrice de rotation.

**11.** Appareil de mesure de coordonnées selon la revendication 9 ou 10, dans lequel, pour déterminer les paramètres ($\mathbf{A}_{anti}$) qui décrivent les composantes tangentielles de la déviation du palpeur, l'unité de commande et d'évaluation (9) peut respecter au moins l'une des deux fonctions cibles suivantes $Q_2$ ou $Q_3$ :

- fonction cible $Q_2 = \sum v_i \times n_i \Rightarrow 0$ ou
- fonction cible $Q_3 = \sum (v_i \times n_i)^2 \Rightarrow Min$

où

$\mathbf{v_i}$ = vecteur de déviation de la bille de palpeur (14) au point de mesure
$\mathbf{n_i}$ = vecteur normal au point de contact de la bille de palpeur lors de la mesure.

**12.** Appareil de mesure de coordonnées selon la revendication 11, dans lequel l'unité de commande et d'évaluation (9) commande l'appareil de mesure de coordonnées en vue d'acquérir les valeurs de mesure de telle manière que les points de mesure utilisés pour la résolution d'au moins l'une desdites fonctions cibles ($Q_1$ et/ou $Q_2$) soient acquis par analyse d'au moins un demi-cercle sur un corps d'étalonnage (15).

**13.** Appareil de mesure de coordonnées selon la revendication 12, dans lequel l'unité de commande et d'évaluation (9) commande l'appareil de mesure de coordonnées en vue d'acquérir les valeurs de mesure de telle manière que celles-ci soient uniformément réparties sur le demi-cercle ou l'hémisphère analysé.

**14.** Appareil de mesure de coordonnées selon la revendication 12, dans lequel le corps d'étalonnage est un anneau d'étalonnage ou une bille d'étalonnage (15).

**15.** Appareil de mesure de coordonnées selon l'une quelconque des revendications 9 à 14, dans lequel on utilise en outre pour la projection des signaux de déviation ($s_i$) des paramètres ($\mathbf{A}_{sym}$) qui décrivent les composantes de la déviation du palpeur qui sont normales à la surface de la pièce à usiner au point de contact.

**16.** Appareil de mesure de coordonnées selon la revendication 15, dans lequel les paramètres ($\mathbf{A}_{sym}$) qui décrivent les composantes normales de la déviation du palpeur forment également une matrice.

**17.** Appareil de mesure de coordonnées selon la revendication 15 ou 16, dans lequel dans lequel les paramètres ($\mathbf{A}_{sym}$) peuvent être déterminés d'une manière connue au moyen de la condition d'égalité gaussienne à partir de la fonction cible suivante :

- fonction cible $Q_1 = \sum f_{n,i}^2 \Rightarrow Min$

où les $f_{n,i}$ représentent les écarts types, et par conséquent les écarts dans une direction normale à la surface de la pièce à usiner au point de contact.

**18.** Produit de programme informatique pouvant être chargé directement dans la mémoire interne d'une unité de commande et d'évaluation (9) d'un appareil de mesure de coordonnées et comprenant des sections de code logiciel au moyen desquelles une projection linéaire de valeurs de mesure (s) d'une tête de mesure (5) de l'appareil de mesure de coordonnées dans un système de coordonnées ($X_M$, $Y_M$, $Z_M$) de l'appareil de mesure de coordonnées peut être effectuée en utilisant des paramètres (A), dans lequel au moins une partie des paramètres ($A_{anti}$) ainsi utilisés

décrivent des composantes de la déviation du palpeur qui sont tangentes à la surface de la pièce à usiner au point de contact.

19. Produit de programme informatique selon la revendication 18, comprenant en outre des sections de code logiciel au moyen desquelles l'appareil de mesure de coordonnées peut être mis en fonctionnement de manière à exécuter le procédé selon l'une quelconque des revendications 2 à 5 ou 7 ou 8.

20. Support de données lisible par machine comportant un produit de programme informatique selon la revendication 18 ou 19.

# FIG.1

# FIG.2a

# FIG.2b

# FIG.2c

# FIG.3

# FIG.4

$r_{Ges} = r_k + r_t$

$v = A * s$

# FIG.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0025087 A1

**In der Beschreibung aufgeführte Nicht-Patentliteratur**

- Multidimensional measuring probe head improves accuracy and functionality of coordinate measuring machines. **W. LOTZE.** Jahre 1994 in der Zeitschrift Measurement. Elsevier, 1994, vol. 13, 91-97